(19) **Europäisches Patentamt / European Patent Office / Office européen des brevets**

(11) **EP 1 776 816 B1**

(12) **EUROPEAN PATENT SPECIFICATION**

(45) Date of publication and mention
of the grant of the patent:
**19.11.2008 Bulletin 2008/47**

(21) Application number: **05760029.8**

(22) Date of filing: **12.07.2005**

(51) Int Cl.:
**H04L 27/00** *(2006.01)*    **H04L 27/20** *(2006.01)*

(86) International application number:
**PCT/IB2005/052309**

(87) International publication number:
**WO 2006/013483 (09.02.2006 Gazette 2006/06)**

(54) **MODULATOR WITH INSTANTANEOUS MODULATION SCHEME SWITCHING IN MULTI-TIME SLOT AND MULTI-MODE OPERATION, FOR A WIRELESS COMMUNICATION EQUIPMENT**

MODULATOR MIT SOFORTIGEM MODULATIONSSCHEMAWECHSEL BEI MEHRFACHZEITSCHLITZ- UND MEHRFACHMODUSBETRIEB FÜR EINE DRAHTLOSE KOMMUNIKATIONSVORRICHTUNG

MODULATEUR A COMMUTATION DE SCHEMA DE MODULATION INSTANTANEE DANS UN FONCTIONNEMENT D'INTERVALLE DE TEMPS MULTIPLE ET DE MODE MULTIPLE, POUR UN EQUIPEMENT DE COMMUNICATION SANS FIL

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.07.2004 EP 04300494**

(43) Date of publication of application:
**25.04.2007 Bulletin 2007/17**

(73) Proprietor: **NXP B.V.**
**5656 AG Eindhoven (NL)**

(72) Inventors:
• **HELFENSTEIN, Markus**
**75008 PARIS (FR)**
• **BODE, Peter**
**75008 PARIS (FR)**
• **LAMPE, Alexander**
**75008 PARIS (FR)**

(74) Representative: **White, Andrew Gordon**
**NXP Semiconductors**
**Intellectual Property Department**
**Cross Oak Lane**
**Redhill**
**Surrey RH1 5HA (GB)**

(56) References cited:
**WO-A-20/04021659       WO-A-20/05088922
US-A1- 2002 106 032**

• **BODE P ET AL: "Combined GMSK and 8PSK modulator for GSM and EDGE" ISCAS 2003. PROCEEDINGS OF THE 2003 IEEE INTERNATIONAL SYMPOSIUM ON CIRCUITS AND SYSTEMS. BANGKOK, THAILAND, MAY 25 - 28, 2003, IEEE INTERNATIONAL SYMPOSIUM ON CIRCUITS AND SYSTEMS, NEW YORK, NY : IEEE, US, vol. VOL. 3 OF 5, 25 May 2003 (2003-05-25), pages III-614, XP002318484 ISBN: 0-7803-7761-3**

**Description**

The present invention relates to the digital transmission part of wireless communication equipments, and more precisely to modulators adapted to switch from one modulation scheme to another between two data bursts associated to consecutive time slots.

In certain communication networks, such as GSM (Global System for Mobile communications), it has been proposed to enhance the data rate through new standards, such as the so-called EGPRS standard (Enhanced General Packet Radio Service). For instance the EGPRS standard has introduced in the GSM network a new modulation scheme, named 8PSK (8 Phase Shift Keying), to improve the data rate previously offered by the GMSK (Gaussian Minimum Shift Keying) modulation scheme.

For flexibility purpose of data transmission, the EGPRS standard defines a multi-time slot (or multislot) and multi-mode operation requiring that more than one time slot out of the eight time slots dividing a GSM frame could be used for data transmission with GMSK or 8PSK modulation. So, the EGPRS wireless communication equipments must comprise a modulator able to switch easily from a GMSK modulation scheme to an 8PSK modulation scheme and vice versa in consecutive time slots.

But, as it is known by one skilled in the art, GMSK is a constant envelope modulation scheme which allows the use of a saturated power amplifier with high efficiency, while 8PSK is a modulation scheme which delivers a modulated carrier that varies not only in amplitude but also in phase and therefore can not allow the use of a saturated power amplifier but for instance a linear one.

So, in multislot operation the modulation scheme changes but also possibly the power amplification mode, which unfortunately introduces interferences between the adjacent channels associated to consecutive time slots.

In order to reduce these interferences it has been proposed to ramp down the transmit power by means of the power amplification and to change the modulator and/or the power amplification mode during a guard period provided between the consecutive time slots. It is recalled that the guard period is a time interval dedicated to control and/or switching operation without data transmission.

Bode P et al "Combined GMSK and 8PSK modulator for GSM and EDGE" ISCAS 2003 Proceedings of the 2003 IEEE International Symposium on Circuits and Systems, Bangkok, Thailand, May 25 - 28 2003, IEEE International Symposium on Circuits and Systems, New York, NY: IEEE, US, Vol. 3 of 5, 25 May 2003 (2003-05-25) pages III-614 to III-617 discloses a combined GMSK/8PSK modulator having a pulse shaping filter. GMSK/8PSK modulator switching is carried out in consecutive time slots at different power levels by providing 6 zeros between 20 GMSK symbols and 20 8PSK symbols and vice versa. The inserted zeros enable smooth up- and down-ramping of the transmit signals by creating a step-on and step-off function of the pulse shaping filter in the I/Q domain.

An alternative to this solution has been notably described in the patent document.WO 2004/021659. It consists of a joint GMSK/8PSK I/Q modulator adapted to power ramping by means of I/Q signal shaping (where I and Q are respectively in-phase and quadrature components), without changing neither the power amplification mode nor the modulators. More precisely, when the GMSK part of the joint GMSK/8PSK I/Q modulator is approximated with a sufficient number of linear and pre-encoded modulators chosen by means of a Laurent's representation, and when the modulator inputs signals are appropriately chosen, a burst shaping can be carried out in the I/Q domain and thereby the problem of power ramping is solved.

This requires that the modulator function is decoupled from the power control loop, or in other words that the ramping of the power amplifier is not determined by the modulator behaviour, but strictly by the power control loop. But, this stringent condition requires that the modulator output signal has an instantaneous transition between on/off states (data mode versus forced-zero mode) rather than a smooth one. Unfortunately, the above described GMSK/8PSK I/Q modulator suffers from a relatively slow on/off output signal transition which renders the power control loop of the saturated power amplifier, which is to be used preferably for GMSK, difficult to control especially when the guard period is reduced to a small number of bits or symbols (for instance 5 bits for timing advance bursts).

So, the object of this invention is to improve the situation notably when the modulator is of the type of the one disclosed in the above cited patent document WO 2004/021659.

According to a first aspect of the present there is provided a modulator for a wireless communication equipment, the modulator being switchable in consecutive time slots from one data burst comprising data bits modulated in accordance with one modulation scheme to another data burst comprising data bits modulated in accordance with another modulation scheme, successive time slots being separated by guard intervals comprising guard bits, the modulator comprising i) a modulation means for generating digital I/Q signals associated with the time slots of a group of time slots, and ii) a filter means for applying a chosen pulse shape defined by filter values to said digital I/Q signals to provide modulated digital I/Q output signals, characterized in that the modulator further comprises initialization means arranged, in response to reception of a transmit burst of digital I/Q signals, to feed said filter means with chosen rotated valid symbols, time-aligned with consecutive guard bits and data bits, before transmission to said filter means of the last guard bits filling said guard interval, in that the initialization means comprises first, second and third initialization means, each of the first, second and third initializing means comprises at least a mapper respectively fed with a chosen bit sequence and a multiplier comprising a first input coupled to said mapper and a second input fed with chosen rotation signals and adapted to deliver said rotated valid symbols as a function of said rotation signals and said chosen bit sequence, and in that reset means are arranged to feed said filter means, just after transmission to said filter means of the last data bits of said received burst, with a reset sequence of signals forced to zero in order that said filter means outputs modulated digital I/Q signals forced to zero.

According to a second aspect of the present invention there is provided wireless communication equipment comprises a modulator in accordance with the first aspect of the present invention.

The modulator according to the invention may include additional characteristics considered separately or combined, and notably:

- its initialization means may be arranged to feed a processing means input of its modulation means with a chosen constant value in association with the feeding of the filter means with the chosen rotated valid symbols. For instance, the constant value may be equal to "1" or "0",

- it may comprise a reset means arranged to feed the filter means, just after transmission to the filter means of the last data of the transmit burst, with a reset sequence of signals forced to zero, in order the filter means outputs modulated digital I/Q signals forced to zero,

- its modulation means may comprise at least first, second and third modulation means, its initialization means may comprise at least first and second, and possibly third initialization means, and its filter means may comprise at least a first filter means coupled to the first and third modulation means through a first multiplexing means, and a second filter means coupled to the second modulation means through a second multiplexing means,

  • on the one hand the first and second filter means are preferably finite impulse response filters each divided into stages and outputting respectively first and second modulated digital I/Q signals, and on the other hand the modulator may comprise a combination means arranged to combine the first and second modulated digital I/Q signals to constitute the modulated digital I/Q signals,

  • the second initialization means may also comprise a finite state machine fed with the chosen bit sequence and feeding the mapper, and the possible third initialization means may also comprise a serial to parallel converter fed with the chosen bit sequence and feeding the mapper. Moreover, the first and third initialization means may share a multiplexer comprising at least first and second inputs respectively connected to the corresponding multipliers and one output feeding a shared up-sampler connected to the first filter means. This shared multiplexer may also comprise a third input for introducing the reset sequence of signals forced to zero,

  • the first and second initialization means are preferably fed with the same bit sequence,

  • the first modulation means and the first filter means may define a zero-th order of a linearized GMSK I/Q modulator, the second modulation means and the

  • second filter means may define a first order of this linearized GMSK I/Q modulator, the zero-th order and first order of the linearized GMSK I/Q modulator being fed with common digital GMSK I/Q signals, and the third modulation means and the first filter means may define an 8PSK I/Q modulator fed with digital 8PSK I/Q signals.

The invention also provides a wireless communication equipment comprising a modulator such as the one above introduced. Such an equipment may be a mobile phone, for instance.

The present invention will now be described, by way of example, with reference to the accompanying drawings, wherein :

Figure 1 schematically illustrates an example of joint 8PSK/GMSK I/Q modulator,

Figure 2A schematically illustrates a simplified example of embodiment of the 8PSK I/Q modulator and the zero-th order path of the linearized GMSK I/Q modulator according to the invention,

Figure 2B schematically illustrates a simplified example of embodiment of the first order (or quadratic) path of the linearized GMSK I/Q modulator according to the invention,

Figure 3 schematically illustrates an example of timing diagrams for the linearized GMSK I/Q modulator of figures 2A and 2B,

Figure 4 schematically illustrates a detailed example of embodiment of the linearized GMSK I/Q modulator according to the invention, including pre-load and reset means, and

Figure 5 schematically illustrates an example of modulo 16 counter and modulo 16 adder combination allowing the mapping of input symbols [0, 1, ..., 7] to one out of 16 possible points on the unit circle where the angles of those points are multiples of $2\pi/16$, taking additionally into account the angle correction of the k-th input sample by $2\pi k/16$.

The appended drawings may not only serve to complete the invention, but also to contribute to its definition, if need be.

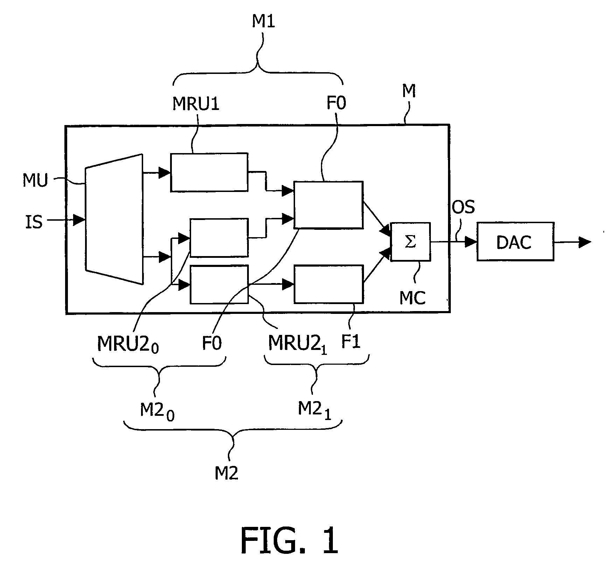

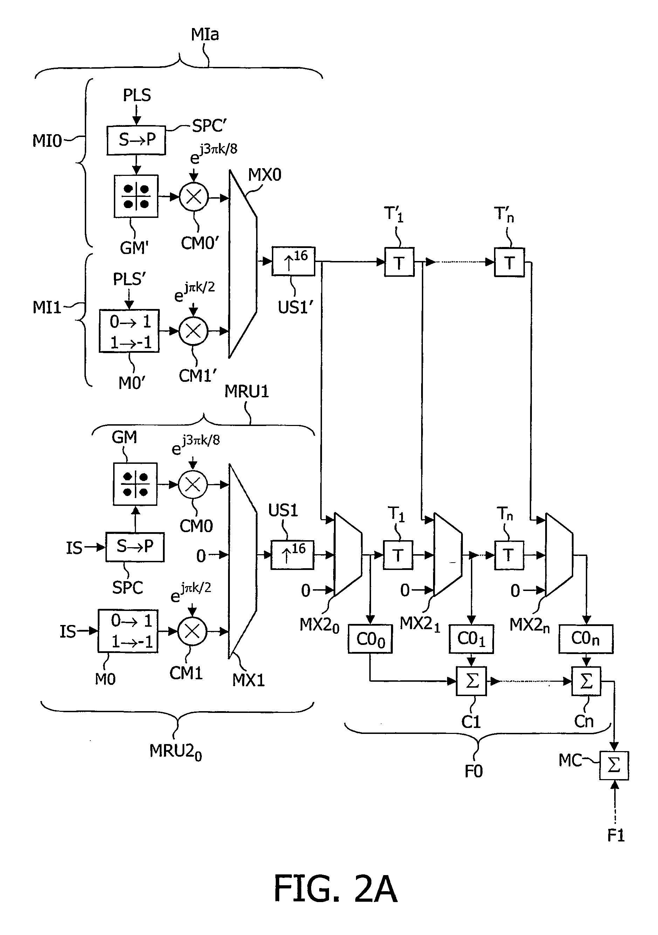

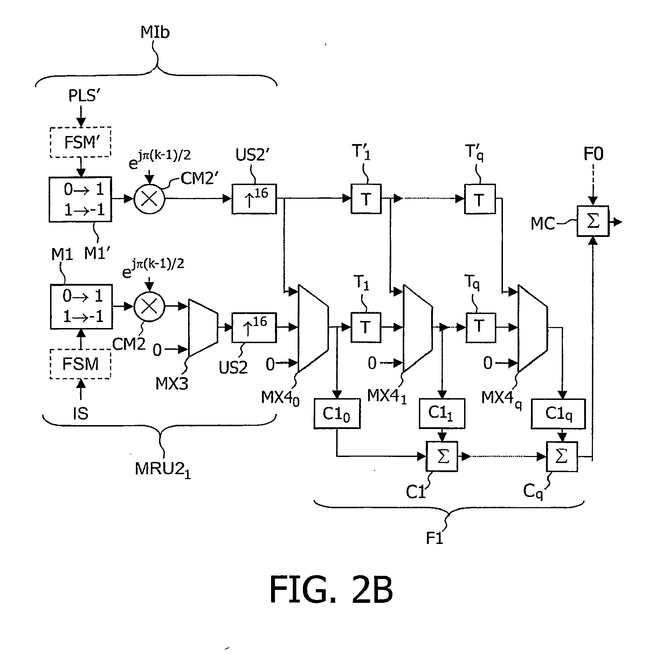

Reference is initially made to figures 1 and 2 to describe an example of modulator M according to the invention, in a non limiting embodiment.

In the following description it will be considered that the illustrated modulator M is a joint 8PSK/GMSK I/Q modulator installed in a wireless communication equipment, such as a GSM mobile phone with enhanced data rate according to the EGPRS (or EDGE) standard. In other words the modulator M is adapted to switch in multimode operation from a GMSK modulation scheme to an 8PSK modulation scheme and vice versa in consecutive time slots of a GSM frame.

It is important to notice that the invention is not limited to this kind of switching which requires a switching between the linear and non-linear modes of a power amplifier. Indeed this invention generally applies to any switching schemes of modulators that are based on Laurent's construction of digitally phase modulated signals by superposition of amplitude modulation pulses. Some more details about this Laurent's construction may be found in the document of P.A. Laurent "Exact and approximate construction of digital phase modulations by superposition of amplitude modulated pulses (AMO)", IEEE Transactions on communications, Vol. 42, N°. 2/3/4, 1994.

Moreover, the invention is not limited to modulators installed in mobile phone. The modulator according to the invention may be installed in any wireless communication equipment, and notably in laptop or PDA (Personal Digital Assistant) comprising a communication device.

As it is known by one skilled in the art, a modulator M is part of the transmission section of a mobile phone (for instance). This transmission section schematically comprises a speech coder, a channel coder, an interleaver, a ciphering, a burst formatter, a joint 8PSK/GMSK I/Q modulator M, a digital to analog converter DAC for the baseband signal, a signal up-converter from baseband to radio frequency (RF), a RF power amplifier and a transmission antenna.

As it is schematically illustrated in figure 1 a joint 8PSK/GMSK modulator M generally comprises a multiplexer MU provided with digital input signals IS by the burst formatter and arranged to feed either an 8PSK I/Q modulator M1 or a linearized GMSK I/Q modulator M2 according to the type of the input signals IS to modulate.

The linearized GMSK I/Q modulator M2 preferably comprises a zero-th order modulation path $M2_0$, also named linear path, and at least a first order modulation path $M2_1$, also named quadratic path, fed with the same input signals IS. It is important to notice that the linearized GMSK I/Q modulator M2 is more generally a n-th order GMSK I/Q modulator which comprises $n + 1$ modulation paths ($n \geq 0$) fed with the same input signals IS. Therefore the modulator according to the invention may comprise a GMSK I/Q modulator comprising more than two modulation paths.

The linear path comprises a mapping/rotation/up-sampling part $MRU2_0$ feeding a filter part F0, also named C0 filter. The quadratic path comprises a mapping/rotation/up-sampling part $MRU2_1$ feeding a filter part F1, also named C1 filter.

The 8PSK I/Q modulator M1 comprises a mapping/rotation/up-sampling part MRU1 feeding the C0 filter F0 that it shares with the linear path of the linearized GMSK I/Q modulator M2.

The respective outputs of the C0 filter F0 and C1 filter F1 are connected to the inputs of a main combiner MC to feed it with modulated I/Q signals. The output of the main combiner MC is connected to the digital to analog converter DAC to feed it with the modulated I/Q signals OS.

According to the invention the 8PSK I/Q modulator M1 and the linearized GMSK I/Q modulator M2 each comprise a modulation section for generating modulated digital I/Q signals associated to time slots of GSM frames and a filter section for applying a chosen pulse shape defined by filter values to the digital I/Q signals in order to output modulated digital I/Q signals OS.

The modulated digital I/Q signals may possibly have a dip in their envelope during the guard intervals inserted between consecutive time slots, as it is described in the above cited patent document WO 2004/021659.

In WO 2004/021659 it is recalled that the dip is introduced in the signal envelope by taking advantage of the modulator's built-in C0/C1 filters and by feeding zeros to these filters during the guard period.

In the present invention a dip may be introduced by means of a digital signal processing (such as a multiplier) in the transmit section, for instance. This is for example proposed in the patent document EP 03104545.3 (filed on december 4, 2003) where an additional multiplier is provided in the digital domain. The multiplier gains are chosen such that a smooth transition between consecutive bursts with different transmit powers is carried out during the guard interval. Alternatively, a dip may be introduced in the analog domain using an external power control loop (not illustrated) which can be controlled by the digital signal processor (DSP) being fed in turn with power amplifier measures.

With such an envelope dip, the unwanted abrupt switching transients in the transmission signals due to abrupt switching of the transmission section can be avoided. So, it is possible to minimize the interferences between adjacent transmission channels associated to consecutive time slots which previously occurred in case of a change of transmission power level between consecutive time slots. Moreover, the envelope dips allow to avoid unwanted discontinuities in the I/Q signals which appeared during switching between 8PSK and GMSK modulation schemes. So, it is possible to minimize the interferences between adjacent transmission channels associated to consecutive time slots which previously occurred in case of switching between 8PSK and GMSK modulation schemes.

It is important to notice that in WO 2004/021659 unwanted spoiling of the neighbouring spectrum has been taken care of by design because of the smooth signal step-on and step-off due to the zeros fed to the FIR filters. In the present invention one aims at decoupling the modulator step-on and step-off and the power control. Hence, the modulator M only makes sure that instantaneous reaction is possible whereas some additional processing has to ensure that proper power ramping occurs and that the spectral requirements are fulfilled. In other words the smooth step-on and step-off have to be done by other means.

Still according to the invention the modulator M comprises an initialization (or pre-load) means arranged, when it receives a burst of digital I/Q signals, to feed the filter means with chosen rotated valid symbols, time-aligned with consecutive guard bits and data bits filling a guard interval and the consecutive time slots that enclose it, before transmission of the last guard bits filling this guard interval to the filter section ("initialization mode"), and/or with digital I/Q signals set to zero, just after transmission of the last data of the transmit burst to the filter section ("reset mode").

It will now be described a non limiting simplified example of embodiment of the modulator M according to the invention with reference to figures 2A and 2B.

As it is schematically illustrated in figure 2A the mapping/rotation/up-sampling part MRU1 of the 8PSK I/Q modulator M1 may comprise a serial to parallel converter SPC fed with serial data stream (or digital input signals) IS by the multiplexer MU of the modulator M. It is recalled that the speech signals (but it may be also pure data) may be quantized by the speech coder and then organized into data frames by the channel coder.

For instance the serial to parallel converter SPC is at least a three-bit serial to parallel converter that outputs three-bit parallel signals. Preferably it is a four-bit serial to parallel converter that outputs four-bit parallel signals where the LSB (Least Significant Bit) is used to distinguish between GMSK data and 8PSK data as well as between various active (or gain)/reset/pre-load modes.

The mapping/rotation/up-sampling part MRU1 of the 8PSK I/Q modulator M1 also comprises a Gray mapper GM fed with the three-bit parallel signals and arranged to map each bit triplet on one out of eight complex signals.

The mapping/rotation/up-sampling part MRU1 of the 8PSK I/Q modulator M1 also comprises a complex multiplier CM0 arranged to shape the I/Q signals output by the Gray mapper GM. More precisely, and as it will be described below in more details, the complex multiplier CM0 is responsible for the mapping of the k-th symbol it receives onto the unit circle. The complex multiplier CM0 multiplies each received signal by a rotation signal equal to $\exp(jk3\pi/8)$ to introduce a rotation of $3k\pi/8$ radians. So the multiplier CM0 outputs rotated symbols which allow to avoid zero crossings in the RF envelope.

The mapping/rotation/up-sampling part MRU1 of the 8PSK I/Q modulator M1 also comprises a "shared" 3x1 multiplexer MX1 comprising a first input fed by the output of the complex multiplier CM0, a second input for zero setting, a third input fed by a complex multiplier CM1 of the mapping/rotation/up-sampling part $MRU2_0$, and one output feeding with input samples an up-sampler US1 adapted to carry out an up-sampling aiming at inserting N-1 zeros after each input sample. For instance and as illustrated N=16.

The function of the multiplexer MX1 is to select between zeros during each guard period and the rotated 8PSK or GMSK symbols during the time slots (or active part of the bursts). Feeding the up-sampler US1 (and the following C0 filter F0) with zeros during the guard period enables a smooth step-on and step-off response of the C0 filter F0.

This up-sampler US1 feeds the shared filter part (or C0 filter) F0 with zeros or digital 8PSK or GMSK I/Q signals through a multiplexer $MX2_0$.

The serial to parallel converter SPC, the Gray mapper GM, the multiplier CM0, the shared multiplexer MX1 and the shared up-sampler US 1 constitute the mapping/rotation/up-sampling part MRU1 of the 8PSK I/Q modulator M1.

The C0 filter F0 is a pulse-shaping filter which has for instance 80 taps $C0_i$ (i = 0 to n, where n = 79) and may be split into m sections $F0_s$ (s = 1 to m), where m = 1 to 80, each having 80/m filter coefficients $C0_i$ (for instance when m = 5 there are 5 sections each having 16 taps). This C0 filter F0 is used for 8PSK and shared with the zero-th order part of the GMSK modulator. It is recalled that in GSM, the time-bandwidth product is BTbit = 0.3 and the Gaussian pulse is treated as limited to -2Tbit...2Tbit (where Tbit designates the GMSK data bit symbol period).

The C0 pulse-shaping filter F0 is preferably a low pass filter defining a finite impulse response (FIR) filter. Such a low pass filter is described in the document of P. Jung, "Laurent's representation of binary digital continuous phase modulated signals with modulation index ½ revisited," IEEE Trans. Comm., vol. 42, pp221-224, 1994.

Each part $F0_s$ of the C0 pulse-shaping filter F0 applies a chosen pulse shape defined by filter values (or coefficients) $C0_s$ to the digital I/Q signals it receives in order to output modulated digital I/Q signals OS. The signal serially travels through all $F0_s$.

Each filter coefficient $C0_i$ of the C0 pulse-shaping filter F0 is fed with the same signal stream (possibly time delayed) through a multiplexer $MX2_i$. More precisely, the filter coefficient $C0_0$ is fed by the output of the multiplexer $MX2_0$, which also feeds one of the three inputs of the following multiplexer $MX2_1$ through a module $T_1$. The filter coefficient $C0_1$ is fed by the output of the multiplexer $MX2_1$, which also feeds one of the three inputs of the following multiplexer $MX2_2$ through a module $T_2$, and so on. And finally, the filter coefficient $C0_n$ is fed by the output of the multiplexer $MX2_n$ through a module $T_n$. Each module $T_i$ (i = 1 to n) is arranged to introduce a chosen delay in time domain. This delay corresponds to Tbit/N.

In the illustrated example, the C0 filter F0 also comprises n combiners (or adders) C1 to Cn for combining together the signals respectively output by each of its n+1 filter coefficients $C0_i$. So the output of the last combiner (or adder) Cn of the C0 filter F0 is connected to one of the two inputs of the main combiner MC, whose output is connected to the digital to analog converter DAC.

The zero-th order modulation path ($MRU2_0$ and F0) of the linearized GMSK I/Q modulator M2 comprises a mapper M0 arranged to map each received signals on one out of two complex signals.

The zero-th order modulation path also comprises a complex multiplier CM1 arranged to rotate the I/Q signals output by the mapper M0. The complex multiplier CM1 is responsible for rotating the symbols it receives on the unit circle (the mapper M0 outputs the possible symbols -1, 1 and the complex multiplier CM1 rotates these values on the unit circle choosing one out of four possible positions). The complex multiplier CM1 multiplies each received signal by a rotation signal equal to $\exp(jk\pi/2)$ to introduce a rotation of $k\pi/2$ radians.

The multiplier CM1 is connected to the third input of the above mentioned shared 3x1 multiplexer MX1.

The mapper M0, the multiplier CM1, the shared multiplexer MX1 and the shared up-sampler US1 constitute the mapping/rotation/up-sampling part $MRU2_0$ of the GMSK I/Q modulator M2.

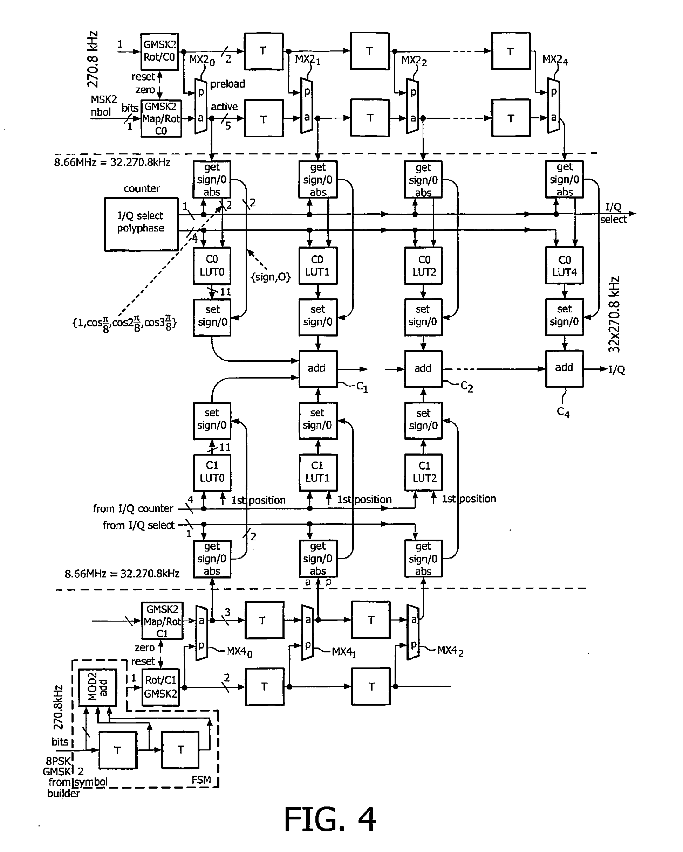

The mapping/rotation/up-sampling part MRU1 and the mapping/rotation/up-sampling part $MRU2_0$ constitute all together a module named Map/Rot C0 (in figure 4 this module is named GMSK2 Map/Rot C0).

The first order (or quadratic) modulation path ($MRU2_1$ and F1) of the linearized GMSK I/Q modulator M2 comprises a Finite State Machine FSM fed with the same digital GMSK signals like the mapper M0 of the zero-th order modulation path ($MRU2_0$ and F0). For instance the Finite State Machine FSM comprises first and second registers and first and second modulo 2 adders. The input of the Finite State Machine FSM feeds the first register and the first modulo 2 adder, while the output of the first register feeds the second register and the first modulo 2 adder. Finally the outputs of the second register and first modulo 2 adder fed the second modulo 2 adder whose output is the output of the Finite State Machine FSM.

The first order modulation path also comprises a mapper M1 arranged to map each signal coming from the Finite State Machine FSM on one out of the two possible signal values -1 and 1.

The first order modulation path also comprises a complex multiplier CM2 arranged to shape the I/Q signals output by the mapper M. The complex multiplier CM2 multiplies each received signal by a rotation signal equal to $\exp(j(k-1)\pi/2)$ to introduce a rotation of $(k-1)\pi/2$ radians.

The first order modulation path also comprises a 2x1 multiplexer MX3 comprising one input fed by the output of the complex multiplier CM2, one input for zero setting and one output feeding with input samples an up-sampler US2 adapted to carry out an up-sampling aiming at inserting N-1 zeros after each input sample. For instance and as illustrated N=16.

The function of the multiplexer MX3 is to select between zeros during each guard period and the mapped and rotated GMSK symbols during the time slots (or active part of the bursts).

The Finite State Machine FSM, the mapper M1, the complex multiplier CM, the multiplexer MX3, and the up-sampler US2 define together the mapping/rotation/up-sampling part $MRU2_1$ of the first order modulation path of the linearized GMSK I/Q modulator M2. This mapping/rotation/up-sampling part $MRU2_1$ is also referenced as GMSK2 Map/Rot C1 in figure 4.

The up-sampler US2 feeds the filter part (or C1 filter) F1 with zeros or digital GMSK I/Q signals through a multiplexer $MX4_0$.

The C1 filter F1 is a pulse-shaping filter which has for instance 48 taps $C1_j$ (j = 0 to q, where q = 47) and is split into p sections ($F1_p$, where p = 1 to 3 in this example), each having 16 filter coefficients $C1_j$. The filter lengths of both filters F0 and F1 have to be the same, namely 80 taps (so, q = n). However, the upper 32 taps of the C1 filter F1 are 0, so they do not have to be realized. It is important to notice that in order to insure a proper time alignment, the summation between the output of the C0 filter F0 and C1 filter F1 has to be done properly.

The C1 pulse-shaping filter F1 is preferably a low pass filter defining a finite impulse response (FIR) filter. Such a low pass filter is also described in the above mentioned document of P. Jung.

Each part $F1_j$ of the C1 pulse-shaping filter F1 applies a chosen pulse shape defined by filter values (or coefficients) $C1_j(t)$ to the digital I/Q signals it receives in order to output modulated digital I/Q signals.

Each filter coefficient $C1_j$ of the C1 pulse-shaping filter F1 is fed with the same signal stream (or a delayed version of it) through a multiplexer $MX4_j$. More precisely, the filter coefficient $C1_0$ is fed by the output of the multiplexer $MX4_0$, which also feeds one of the three inputs of the following multiplexer $MX4_1$ through a module $T_1$. The filter coefficient $C1_1$ is fed by the output of the multiplexer $MX4_1$, which also feeds one of the three inputs of the following multiplexer $MX4_2$ through a module $T_2$, and so on. And finally, the filter coefficient $C1_q$ is fed by the output of the multiplexer $MX4_q$ through a module $T_q$.

In the illustrated example, the C1 filter F1 also comprises q combiners (or adders) C1 to Cq for combining together the signals respectively output by each of its q+1 filter coefficients $C1_j$. So the output of the last combiner (or adder) Cq of the C1 filter F1 is connected to one of the two inputs of the main combiner MC, whose output is connected to the digital to analog converter DAC.

According to the invention and as illustrated in figures 2A and 2B, the joint modulator M comprises initialization means for loading the FIR filter states with a "dummy" sequence of valid symbols during the guard period between two time slots, i.e. before the transmission of the active part of the transmit burst (pre-load mode), and/or with digital I/Q signals set to zero just after the active part of a transmit burst (reset mode).

More precisely, the pre-load part of the initialization operation aims at loading all the flip-flops in the C0 FIR filter F0 and C1 FIR filter F1 (modules T (for delay in time domain)) with valid symbols. A valid symbol is any possible bit combination out of the GMSK (or 8PSK) alphabet and properly rotated.

The rotation part is very important because it avoids the delay associated with the FIR filter when all zero is the initial state. Moreover, the rotation of the dummy sequence allows to switch between a dummy sequence and data bits without phase jumps. Effectively, an input signal will have to travel first through the filter before being fully visible at the output. This can be avoided when a valid dummy sequence of rotated valid symbols is loaded into the FIR filters during the guard period. In this way, it is possible to generate a specific signal which is compliant with the power-time template.

With this kind of initialization one can obtain a sharp transition from a very small amplitude (due to the absence of transmission during the guard period) to the required amplitude level.

The initialization (or pre-load) means may be divided in two parts : a first one MIa dedicated at least to the zero-th order path ($MRU2_0$ and F0) of the linearized GMSK I/Q modulator M2, and also possibly to the 8PSK I/Q modulator M1 (as illustrated in figure 2A), and a second one MIb dedicated to the first order path ($MRU2_1$ and F1) of the linearized GMSK I/Q modulator M2 (as illustrated in figure 2B).

In the example illustrated in figure 2A, the first part MIa of the initialization (or pre-load) means comprises a sub part MI0 dedicated to the 8PSK I/Q modulator M1 (and which is not mandatory when GMSK switching is only used) and a second part MI1 dedicated to the zero-th order path ($MRU2_0$ and F0) of the linearized GMSK I/Q modulator M2.

The first sub part MI0 comprises a serial to parallel converter SPC' fed with a chosen sequence of initialization (or pre-load) bits PLS. As the serial to parallel converter SPC, this serial to parallel converter SPC' is for instance a three-bit serial to parallel converter that outputs three-bit parallel signals PLS.

The first sub part MI0 also comprises a Gray mapper GM' fed with the three-bit parallel signals and arranged to map each bit triplet on one out of eight complex signals.

The first sub part MI0 also comprises a complex multiplier CM0' arranged to rotate the signals output by the Gray mapper GM'. The complex multiplier CM0' multiplies each received signal by a rotation signal equal to $\exp(jk3\pi/8)$ to introduce a rotation of $3k\pi/8$ radians. So the multiplier CM0' outputs rotated symbols which allow to properly phase-align them with the input data when switching between pre-load, reset and active modes.

In an alternative it is possible to generate input sequences in which all the bits are equal to zero (0) or one (1). For this purpose it is possible to hardwire the complex multiplier CM0' input to minus one (-1) or one (1), thus omitting the serial to parallel converter SPC' and also the Gray mapper (or even the whole branch if the 8PSK initialization switching is not foreseen).

The second sub part MI1 comprises a mapper M0' fed with a chosen sequence of initialization (or pre-load) bits PLS', and arranged to map each bit on one out of two complex signals as the mapper M0.

The second sub part MI1 also comprises a complex multiplier CM1' arranged to rotate the signals output by the mapper M0'. The complex multiplier CM1' multiplies each received signal by a rotation signal equal to $\exp(jk\pi/2)$ to introduce a rotation of $k\pi/2$ radians. So the multiplier CM1' outputs rotated symbols which allow to properly phase-align them with the input data when switching between pre-load, reset and active modes.

In an alternative it is possible T generate input sequences in which all the bits are equal to zero (0) or one (1). For this purpose it is possible to hardwire the complex multiplier CM1' input to minus one (-1) or one (1), thus omitting the mapper M0'.

The first part MIa of the initialization means also comprises a shared 2x1 multiplexer MX0 comprising a first input fed by the output of the complex multiplier CM0', a second input fed by the complex multiplier CM1', and one output feeding with input samples an up-sampler US1' adapted to carry out an up-sampling aiming at inserting N-1 zeros after each input sample in order to output the chosen valid rotated bits for the initialization (or pre-load) mode. In the illustrated example N is equal to 16.

The function of the multiplexer MX0 is to select between the rotated 8PSK and GMSK symbols during the pre-load mode (when it is implemented, i.e. when the initialization of the 8PSK path is foreseen).

The output of the up-sampler US1' is connected to the first input of the multiplexer $MX2_0$ and to each first input of each other multiplexer $MX2_1$ to $MX2_q$ respectively through modules $T'_1$ to $T'_q$ (delay in time domain modules).

So the first input of each multiplexer $MX2_i$ is fed with rotated signals for initialization (or pre-load) mode purpose, the second input of each multiplexer $MX2_i$ is fed with rotated signals for active mode purpose, and the third input of each multiplexer $MX2_i$ is fed with zeros for a reset mode purpose.

The first part MIa is also named Rot/C0 module (in figure 4 this module is named GMSK2 Rot/C0 (only the GMSK initialisation is shown)).

The second part MIb of the initialization (or pre-load) means comprises a Finite State Machine FSM preferably fed with the same chosen sequence of initialization (or pre-load) bits PLS' than the mapper M0'.

The second part MIb also comprises a mapper M1' arranged to map each signal coming from the Finite State Machine FSM' on one out of two complex signals.

The second part MIb also comprises a complex multiplier CM2' arranged to shape the signals output by the mapper M1'. The complex multiplier CM2' multiplies each received signal by a rotation signal equal to $\exp(j(k-1)\pi/2)$ to introduce a rotation of $(k-1)\pi/2$ radians. So the multiplier CM2' outputs rotated symbols which allow to properly phase align them when switching between active, pre-load and reset modes.

The second part MIb also comprises an up-sampler US2' fed by the output of the multiplier CM2' with the rotated symbol samples and adapted to carry out an up-sampling aiming at inserting N-1 zeros after each sample in order to output the chosen valid rotated bits for the initialization (or pre-load) mode. In the illustrated example N=16.

The output of the up-sampler US2' is connected to the first input of the multiplexer $MX4_0$ and to each first input of each other multiplexer $MX4_1$ to $MX4_q$ respectively through modules $T'_1$ to $T'_q$ (delay in time domain modules).

So the first input of each multiplexer $MX4_j$ is fed with rotated signals for initialization (or pre-load) mode purpose, the second input of each multiplexer $MX4_j$ is fed with rotated signals for active mode purpose, and the third input of each multiplexer $MX4_j$ is fed with zeros for a reset mode purpose.

The second part MIb is also named Rot/C1 module (in figure 4 this module is referenced GMSK2 Rot/C1).

In an alternative it is possible to generate input sequences in which all the bits are equal to zero (0) or one (1). For this purpose it is possible to hardwire the complex multiplier CM2' input to minus one (-1) or one (1), thus omitting the mapper M2' and the Finite State Machine FSM'.

One can notice that for the pre-load mode the complex multipliers CM1 and CM2 may comprise an additional input fed with a chosen constant value and respectively with the $\exp(jk\pi/2)$ and $\exp(j(k-1)\pi/2)$ terms, which results in the omission of the mappers MO and M1. This is possible because the initialization (or pre-load) needs to be done only with valid and properly rotated symbols (or bits). For this purpose it is possible to hardwire the additional input to 1 (or -1) and still rotating by the CMi's results in a properly rotated dummy sequence which can be phase aligned with the active mode, i.e. switched without introducing phase jumps. In this case, it is also possible to omit the Finite State Machine FSM (which acts as a modulo 2 adder in this special case) because it calculates the same output for every constant input.

According to the invention and as illustrated in figures 2A and 2B, the initialization means of the joint modulator M may also comprise reset means for loading the FIR filter states with a chosen "dummy" sequence (which does not comprise necessary valid symbols) just after the transmission of the active part of the burst. This chosen "dummy" sequence is provided to obtain a fast transition of the FIR filter states from the last valid symbol (with the transmitted amplitude) to the all zero state of the guard period which corresponds to a very small amplitude.

The chosen dummy sequence is a sequence of digital I/Q signals set to zero.

It is important to notice that in the reset mode digital I/Q signals set to zero are fed into the FIR filters, while in the pre-load mode the initialization means is fed with GMSK or 8PSK zero (0) or one (1) which are then mapped onto digital I/Q signals respectively equal to minus one (-1) or one (1), and then a chosen rotation is applied to the resulting digital I/Q signals, which lie on the unit circle, before they are fed into the FIR filters.

The reset dummy sequence may be introduced through the third input of each multiplexer $MX2_i$ or $MX4_j$, or else through the first input of each multiplexer $MX2_i$ or $MX4_j$ (dedicated to the pre-load (or initialization) signals) when it is generated by the initialization (or pre-load) means (in this case the initialization means also acts as a reset means).

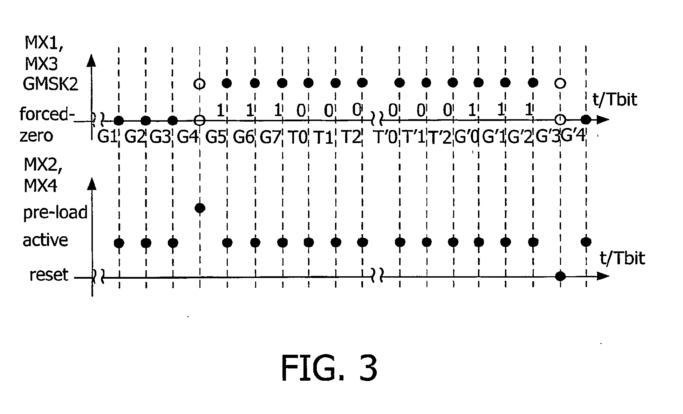

Figure 3 illustrates a possible timing diagram for the linearized GMSK I/Q modulator M2 and more precisely for its multiplexers MX1 or MX3 (in the upper part) and for its multiplexers MX2 and MX4 (in the lower part).

Here the pre-loading (or initialization) takes place after the four leading guard bits referenced G1 to G4 which are followed by some specially defined other guard bits G5 to G7. These guard bits filled the guard interval which is inserted between two consecutive time slots filled with data bits.

More precisely, in this example, the guard period takes G1, ..., G7 (guard bits) but the modulator M2 is switched on only after G4. So, during G1, G2 and G3 the multiplexers MX1 and MX3 are set to forced zero (second input on) while the multiplexers MX2 and MX4 are set to active (second input on). So, a smooth step-down from the previous GMSK burst is obtained. At G4, the multiplexers MX1 and MX3 are switched to GMSK2 (first input on) while the multiplexers MX2 and MX4 are set to pre-load (first input on) to enables the dummy sequence to be pre-loaded into the C0 and C1 filters. Thus, a fast amplitude transition occurs at the output and new data bits follow the dummy sequence and "real data" reach the output after 2.5 symbol periods (i.e. after 2.5 Tbit).

In figure 3 tail bits T0 to T2 are followed by data bits (not shown and corresponding to a "normal" transmission), which are followed by other tail bits T'0 to T'2, and t/Tbit designates "normalized time scale".

In this example, the resetting part (forced zero) follows after the third trailing guard bit G'3, i.e. after the active part of the burst and after an additional transmission of three more specially defined guard bits (G'0 to G'2). The reset mode could be activated already during G'0 but in practice it is preferable to introduce some time for the switch-off process.

One now refers to figure 4 to describe a more detailed example of embodiment of the linearized GMSK I/Q modulator M2 according to the invention.

In this example one considers that the modulator M time interleaves the in-phase signal I and the quadrature signal Q and therefore runs 2 times faster than a modulator in which the in-phase signal I and the quadrature signal Q are processed in parallel. But this is not mandatory.

Moreover, this example only describes the zero-th order path ($MRU2_0$ and F0) and the first order path ($MRU2_1$ and F1) of the linearized GMSK I/Q modulator M2, but not the 8PSK I/Q modulator M1. But, regarding that the GMSK modulator's zero-th order path ($MRU2_0$ and F0) and the 8PSK I/Q modulator M1 share the C0 filter F0, addition of the latter in figure 4 only requires to consider that the GMSK2 Map/Rot C0 module comprises an additional 8PSK Mapping/Rotation module (Mapping/Rotation for 8PSK is different from Mapping/Rotation for GMSK) for 8PSK and that the GMSK2 Rot/C0 module comprises an additional input for 8PSK pre-load signals (as in figure 2A), and to proceed as described below.

More, in this example the multiplexers $MX2_i$ and $MX4_j$ each only comprise a first input (p) for initialization (or pre-load) signals and a second input (a) for the active I/Q signals, but they may also comprise a third input for reset signals as in figures 2A and 2B. One can also consider that the first input (p) is used both for pre-load signals and reset signals.

For the 8PSK signals, the 8PSK Map/Rot C0 module encodes the 16 possible states of the rotated PSK symbols into 4 bits. In addition one may provide a forced-zero flag to indicate whether the C0 filter F0 must be fed with rotated 8PSK symbols or with zeros.

The symbol mapping combines the signals output by the Gray mapper GM as well as the additional rotation symbol of the $\exp(j3\pi k/8)$ term. The Gray mapper GM can be seen as a group of gates which translates the 3-bit symbols into the corresponding position on a unit circle according to the following rule (in this example the unit circle comprises $2\pi/16$ parts) : symbol $[0, 1, 2, 3, 4, 5, 6, 7] \rightarrow [6, 8, 4, 2, 12, 10, 14, 0]$

A modulo 16 counter running at triple speed and a modulo 16 adder combination is taking care of the angle correction when it is implemented according to the following rule :

$$\Phi_{Rot}(k) = \mathrm{mod}_{16}(\Phi_{Map}(k) + \mathrm{mod}_{16}(3k)) = \mathrm{mod}_{16}(\Phi_{Map}(k) + 3k)$$

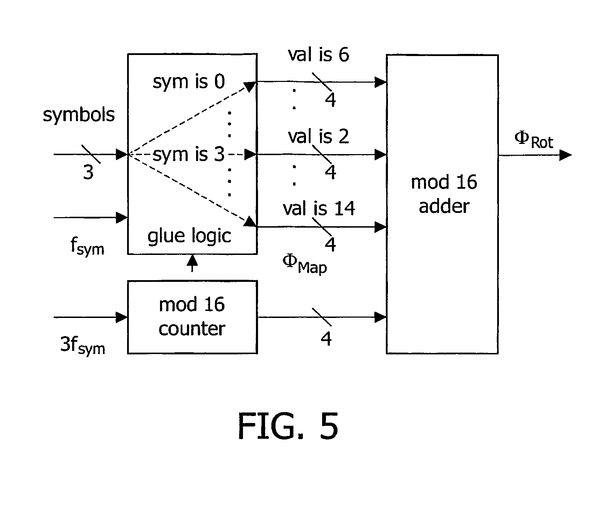

where k starts from zero (0) and $\Phi_{Map}$ and $\Phi_{Rot}$ are introduced in the block diagram illustrated in figure 5.

For the GMSK signals, the GMSK2 Map/Rot C0 or C1 module takes care of the correct bit to symbol mapping and rotates with an $\exp(j\pi(k-M)/2)$ term, where M = 0 for C0 and M = 1 for C1.

As in the case of 8PSK signals, the mapper M0 or M0' translates the incoming symbols into the corresponding position on a unit circle according to the following rule (presupposing in this example that the angles of those positions are integer multiples of $2\pi/16$) : symbol $[0, 1] \rightarrow [0, 8]$.

A modulo 16 counter running at four times the speed and a modulo 16 adder combination is taking care of the angle correction when it is implemented according to the following rules:

$$\text{for C0, } M = 0, \ \Phi_{Rot}(k) = \mathrm{mod}_{16}(\Phi_{Map}(k) + \mathrm{mod}_{16}(4k)) = \mathrm{mod}_{16}(\Phi_{Map}(k) + 4k)$$

$$\text{for C1, } M = 1, \ \Phi_{Rot}(k) = \mathrm{mod}_{16}(\Phi_{Map}(k) + \mathrm{mod}_{16}(4(k\text{-}1))) = \mathrm{mod}_{16}(\Phi_{Map}(k) + 4(k\text{-}1)).$$

The implementation of these rules requires a simple adaptation of the block diagram illustrated in figure 5.

Contrary to figures 2A and 2B, in the illustrated example of figure 4 the C0 filter F0 and the C1 filter F1 share the same combiner (or adder). Therefore the main combiner MC is not required. More, only m-1 combiners C1...C4 are provided for the m=5 C0 filter parts.

Moreover each of the m = 5 parts of the C0 filter F0 and each of the p = 3 parts of the C1 filter F1 comprises a look up table respectively named C0 LUTr (here r = 0 to m-1) and C1 LUTv (here v = 0 to p-1) coupled to a first module named get sign/0 abs and to a second module named set sign/0.

Each module get sign/0 abs is arranged to determine the sign and the absolute value of $\mathrm{Re}\{e^{j\Phi_{Rot}(k)}\}$ or $\mathrm{Im}\{e^{j\Phi_{Rot}(k)}\}$ depending on the I/Q select bit provided by an I/Q select polyphase counter (also connected to each C0 LUTr and C1 LUTv).

The I/Q select polyphase counter comprises a counter part adapted to process binary weights up to 16 and a I/Q select part to select between I and Q digital signals.

The size of the look up table is kept small in order to address the C0 LUTr or C1 LUTv with all possible absolute values $|Re\{e^{j\Phi Rot(k)}\}|$ or $|Im\{e^{j\Phi Rot(k)}\}|$ which are $\{1, \cos(\pi/8), \cos(2\pi/8), \cos(3\pi/8), 0\}$. The four non-zero values are coded in 2 bits. The 0 value and the sign are coded in two other bits. The former 2 bits coded absolute values and the 4 bit of the polyphase counter form the 6 bit address of the C0 LUTr or C1 LUTv.

Each set sign/0 module sets the sign of the C0 LUTr or C1 LUTv output or sets it to zero.

Preferably, the data word lengths of the C0 LUTr and C1 LUTv are slightly larger than the preferred DAC resolution of about 10 bits to avoid rounding errors.

The get-sign operation needs inputs from the I/Q select part of the I/Q select polyphase counter as well as from one symbol delay line T.

The sign bit for the Q-signal (imaginary part) can be mapped according to the following rules (thereby we use the following definitions $I_{\Phi Rot} = Re\{e^{j\Phi Rot(k)}\}$ and $Q_{\Phi rot} = Im\{e^{j\Phi Rot(k)}\}$) :

$$\text{sign}(Q_{\Phi Rot}) : \text{positions } [1, 2, 3, 4, 5, 6, 7] \rightarrow \text{decimal value } +1$$

$$\text{sign}(Q_{\Phi Rot}) : \text{positions } [9, 10, 11, 12, 13, 14, 15] \rightarrow \text{decimal value } -1$$

$$\text{sign}(Q_{\Phi Rot}) : \text{positions } [0, 8] \rightarrow \text{decimal value } 0$$

The sign bit for the I-signal (real part) can be mapped according to the following rules :

$$\text{sign}(I_{\Phi Rot}) : \text{positions } [13, 14, 1, 0, 1, 2, 3] \rightarrow \text{decimal value } +1$$

$$\text{sign}(I_{\Phi Rot}) : \text{positions } [5, 6, 7, 8, 9, 10, 11] \rightarrow \text{decimal value } -1$$

$$\text{sign}(I_{\Phi Rot}) : \text{positions } [4, 12] \rightarrow \text{decimal value } 0$$

With such rules the decimal values +/-1 can be coded into one bit and the decimal value 0 can be combined with the forced-zero signal. The sign bit as well as the forced-zero bit are then fed to the appropriate set sign/0 modules. One can notice that the forced-zeros bit can be used to set I/Q signals to a zero value but also to set only one of the two to zero. This is necessary since the look up tables do not have a zero-entry position for I/Q signals.

Moreover, the 4-bit inputs of the C0 LUTr and C0 LUTv modules containing the position (angle) of the signal on the unit circle are mapped onto the first quadrant, i.e. to $\{1, \cos(\pi/8), \cos(2\pi/8), \cos(3\pi/8)\}$. So, no information is lost during this operation since I and Q signals are processed separately and since the signs of the respective signals are known.

The mapping for I and Q signals can be done according to the following rules :

$$\text{posLUT}(Q_{\Phi Rot}) : \text{positions } [(0^*, 4, 8, 12^*), (1, 7, 9, 15), (2, 6, 10, 14), (3, 5, 11, 13)] \rightarrow [1, \cos(\pi/8), \cos(2\pi/8), \cos(3\pi/8)]$$

$$\text{posLUT}(I_{\Phi Rot}) : \text{positions } [(0, 4^*, 8^*, 12), (3, 5, 11, 13), (2, 6, 10, 14), (1, 7, 9, 15)] \rightarrow [1, \cos(\pi/8), \cos(2\pi/8), \cos(3\pi/8)]$$

For instance, the position values (1, 7, 9, 15) of the Q-signal are mapped to cos($\pi$/8) which is the second entry of the look up table. All the position values having an asterix will be pointing to wrong table entries, i.e. position "0" of the Q-signal will be mapped to the first entry of the table (because the imaginary part of this position must be zero). However the sign bit of this position values takes care of this situation and flushes the set sign/0 module with forced-zero entry.

One can notice that the sizes of the C0 LUTr and C1 LUTv modules can be reduced if necessary. Effectively, C0 LUT0 is a mirrored version of C0 LUT4, C0 LUT1 is a mirrored version of C0 LUT3, and C0 LUT2 can be mirrored around its own symmetry axis. So, one can use the symmetry of the C0/C1 coefficients to optimize the sizes of the C0 LUTr and C1 LUTv modules.

Moreover, simple changes in the I/Q select polyphase counter can allow to save half of the look up tables at the expense of a faster read-out time. No change is necessary for the counters of C0 LUT0 and C0 LUT1. The counters of C0 LUT3 and C0 LUT4 simply run in reverse order and the counter for C0 LUT2 runs from 0 ...7 and back from 7 ... 0. In doing so, C0 LUT3 and C0 LUT4 and half of C0 LUT2 can be dropped. A similar solution can be established for the C1 coefficients.

The invention is not limited to the embodiments of modulator described above, only as examples, but it encompasses all alternative embodiments which may be considered by one skilled in the art within the scope of the claims hereafter.

## Claims

1. A modulator (M) for a wireless communication equipment, the modulator being switchable in consecutive time slots from one data burst comprising data bits modulated in accordance with one modulation scheme to another data burst comprising data bits modulated in accordance with another modulation scheme, successive time slots being separated by guard intervals comprising guard bits, the modulator comprising i) a modulation means (SPC,M0,FSM, M1,GM,CM0,CM1,CM2,MX1,MX3,US1, US2) for generating digital I/Q signals associated with the time slots of a group of time slots, and ii) a filter means (F0,F1) for applying a chosen pulse shape defined by filter values to said digital I/Q signals to provide modulated digital I/Q output signals, **characterized in that** the modulator further comprises initialization means (SPC',M0',FSM',M1',GM',CM0',CM2',US1',US2',MX0) arranged, in response to reception of a transmit burst of digital I/Q signals, to feed said filter means with chosen rotated valid symbols, time-aligned with consecutive guard bits and data bits, before transmission to said filter means of the last guard bits filling said guard interval, **in that** the initialization means comprises first (M0',CM1',MX0,US1'), second (FSM',M1',CM2', US2') and third (SPC',GM',CM0',US1',MX0) initialization means, each of the first, second and third initializing means comprises at least a mapper (M0',M1',GM') respectively fed with a chosen bit sequence and a multiplier (CM0', CM2',CM1') comprising a first input coupled to said mapper and a second input fed with chosen rotation signals and adapted to deliver said rotated valid symbols as a function of said rotation signals and said chosen bit sequence, and **in that** reset means are arranged to feed said filter means (F0,F1), just after transmission to said filter means of the last data bits of said received burst, with a reset sequence of signals forced to zero in order that said filter means outputs modulated digital I/Q signals forced to zero.

2. A modulator according to claim 1, **characterized in that** said initialization means (SPC',M0',FSM',M1',GM',CM0', CM2',US1',US2'MX0) is arranged to feed a processing means input of said modulation means with a chosen constant value in association with the feeding of the filter means with said chosen rotated valid symbols.

3. A modulator according to claim 2, **characterized in that** said constant value is equal to "1".

4. A modulator according to claim 2, **characterized in that** said constant value is equal to "0".

5. A modulator according to any one of claims 1 to 4, **characterized in that** said modulation means (SPC,M0,FSM, M1,GM,CM0,CM1,CM2,MX1,MX3,US1, US2) comprises at least first (M0,CM1,MX1,US1), second (FSM, M1,CM2,MX3,US2) and third (SPC,GM,CMO,MX1,US) modulation means, and said filter means (F0,F1) comprises at least a first filter means (F0) coupled to said first and third modulation means through a first multiplexing means (MX2$_i$), and a second filter means (F1) coupled to said second modulation means through a second multiplexing means (MX4$_j$).

6. A modulator according to claim 5, **characterized in that** said first (F0) and second (F1) filter means are finite impulse response filters each divided into stages and outputting respectively first and second modulated digital I/Q signals, and that it comprises combination means (C1-Cn;C1-Cq) arranged to combine said first and second modulated digital I/Q signals to constitute said modulated digital I/Q signals.

7.  A modulator according to any one of claims 1 to 6, **characterized in that** said second initialization means (FSM', M1',CM2',US2') further comprises a finite state machine ( FSM') having an input for receiving the chosen bit sequence and an output coupled to the mapper (M1').

8.  A modulator according to any one of claims 1 to 7, **characterized in that** said third initialization means (SPC',GM', CM0',US1',MX0) further comprises a serial to parallel converter (SPC') having an input for receiving the chosen bit sequence and an output coupled to the mapper (GM').

9.  A modulator according to claim 5 or 6, **characterized in that** said first (M0',CM1',MX0,US1') and third (SPC',GM', CM0',US1',MX0) initialization means share a multiplexer (MX0) comprising at least first and second inputs respectively connected to said multipliers (CM1',CM2') and one output feeding a shared up-sampler (US1') connected to the first filter means (F0).

10. A modulator according to claim 9, **characterized in that** said shared multiplexer (MX0) comprises a third input for introducing said reset sequence of signals forced to zero.

11. A modulator according to any one of claims 1 to 10, **characterized in that** said first (M0',CM1',MX0,US1') and second (FSM',M1',CM2',US2') initialization means are fed with a same chosen bit sequence.

12. A modulator according to claims 5 or 6, **characterized in that** said first modulation means and said first filter means (F0) define a zero-th order of a linearized GMSK I/Q modulator, said second modulation means and said second filter means (F1) define a first order of said linearized GMSK I/Q modulator, said zero-th order and said first order of said linearized GMSK I/Q modulator being fed with common digital GMSK I/Q signals, and said third modulation means and said first filter means (F0) define an 8PSK I/Q modulator fed with digital GMSK I/Q signals.

13. A wireless communication equipment, **characterized in that** it comprises a modulator (M) according to any one of the preceding claims.

**Patentansprüche**

1.  Modulator (M) für eine drahtlose Kommunikationsvorrichtung, wobei der Modulator in aufeinanderfolgenden Zeitschlitzen von einem Datenburst, umfassend gemäß einem Modulationsschema modulierte Datenbits, zu einem weiteren Datenburst, umfassend gemäß einem weiteren Modulationsschema modulierte Datenbits, schaltbar ist, wobei nacheinander folgende Zeitschlitze durch Schutzbits umfassende Schutzintervalle voneinander getrennt sind, wobei der Modulator i) ein Modulationsmittel (SPC, M0, FSM, M1, GM, CM0, CM1, CM2, MX1, MX3, US1, US2) umfasst zum Generieren digitaler I/Q-Signale, die den Zeitschlitzen einer Gruppe von Zeitschlitzen zugewiesen sind, und ii) ein Filtermittel (F0, F1) umfasst zum Anwenden einer durch Filterwerte definierten gewählten Impulsform auf die digitalen I/Q-Signale, um modulierte digitale I/Q-Signale bereitzustellen, **dadurch gekennzeichnet, dass** der Modulator weiterhin Initialisierungsmittel (SPC', M0', FSM', M1', GM', CM0', CM2', US1', US2', MX0) umfasst, angeordnet, um in Reaktion auf den Empfang eines Sendebursts von digitalen I/Q-Signalen die Filtermittel mit gewählten zyklisch verschobenen gültigen Symbolen zu speisen, die aufeinanderfolgenden Schutzbits und Datenbits zeitlich zugeordnet sind, vor dem Senden der letzten Schutzbits, die das Schutzintervall fiillen, an die Filtermittel, **dadurch**, dass das Initialisierungsmittel erstes (M0', CM1', MX0, US1'), zweites (FSM', M1', CM2', US2') und drittes (SPC', GM', CM0', US1', MX0) Initialisierungsmittel umfasst, wobei das erste, zweite und dritte Initialisierungsmittel jeweils zumindest einen Mapper (M0', M1', GM') umfasst, jeweils gespeist mit einer gewählten Bitfolge, und einen Multiplizierer, umfassend einen an den Mapper gekoppelten ersten Eingang und einen zweiten Eingang, gespeist mit gewählten Rotationssignalen und ausgelegt, um die zyklisch verschobenen gültigen Symbole als eine Funktion der Rotationssignale und der gewählten Bitfolge zu liefern, sowie **dadurch**, dass Rücksetzmittel angeordnet sind, um das Filtermittel (F0, F 1) unmittelbar nach Senden der letzten Datenbits des empfangenen Bursts an die Filtermittel mit einer Rücksetzfolge von Signalen zu speisen, die auf Null gezwungen sind, damit die Filtermittel auf Null gezwungene modulierte digitale I/Q-Signale ausgeben.

2.  Modulator nach Anspruch 1, **dadurch gekennzeichnet, dass** das Initialisierungsmittel (SPC, M0, FSM, M1, GM', CM0', CM2', US1', US2', MX0) angeordnet ist, um einen Verarbeitungsmitteleingang des Modulationsmittels mit einem gewählten konstanten Wert in Verbindung mit dem Speisen der Filtermittel mit den gewählten zyklisch verschobenen gültigen Symbolen zu speisen.

**3.** Modulator nach Anspruch 2, **dadurch gekennzeichnet, dass** der konstante Wert gleich "1" ist.

**4.** Modulator nach Anspruch 2, **dadurch gekennzeichnet, dass** der konstante Wert gleich "0" ist.

**5.** Modulator nach einem der Ansprüche 1 bis 4, **dadurch gekennzeichnet, dass** das Modulationsmittel (SPC, M0, FSM, M1, GM, CM0, CM1, CM2, MX1, MX3, US1, US2) zumindest erstes (M0, CM1, MX1, US1), zweites (FSM, M1, CM2, MX3, US2) und drittes (SPC, GM, CM0, MX1, US) Modulationsmittel umfasst und das Filtermittel (F0, F1) zumindest ein durch ein erstes Multiplexmittel (MX2$_i$) an das erste und dritte Modulationsmittel gekoppeltes erstes Filtermittel (F0) und ein durch ein zweites Multiplexmittel (MX4$_j$) an das zweite Modulationsmittel gekoppeltes zweites Filtermittel (F1) umfasst.

**6.** Modulator nach Anspruch 5, **dadurch gekennzeichnet, dass** das erste (F0) und zweite (F1) Filtermittel Finite-Impulsantwort-Filter sind, die jeweils in Stufen unterteilt sind und jeweils erstes und zweites moduliertes digitales I/Q-Signal ausgeben, und **dadurch**, dass er Kombinationsmittel (C1-Cn, C1-Cq) umfasst, angeordnet, um das erste und das zweite modulierte digitale I/Q-Signal zu kombinieren, um die modulierten digitalen I/Q-Signale zu bilden.

**7.** Modulator nach einem der Ansprüche 1 bis 6, **dadurch gekennzeichnet, dass** das zweite Initialisierungsmittel (FSM', M1', CM2', US2') weiterhin einen endlichen Automaten (FSM') umfasst, aufweisend einen Eingang zum Empfangen der gewählten Bitfolge und einen an den Mapper (M1') gekoppelten Ausgang.

**8.** Modulator nach einem der Ansprüche 1 bis 7, **dadurch gekennzeichnet, dass** drittes Initialisierungsmittel (SPC', GM', CM0', US 1', MX0) weiterhin einen Serien-ParallelUmsetzer (SPC') umfasst, aufweisend einen Eingang zum Empfangen der gewählten Bitfolge und einen an den Mapper (GM') gekoppelten Ausgang.

**9.** Modulator nach Anspruch 5 oder 6, **dadurch gekennzeichnet, dass** erstes (M0', CM1', MX0, US1') und drittes (SPC', GM', CM0', US1', MX0) Initialisierungsmittel gemeinsam einen Multiplexer (MX0) nutzen, umfassend zumindest ersten und zweiten Eingang, jeweils verbunden mit Multiplizierem (CM1', CM2'), und einen Ausgang, der einen mit dem ersten Filtermittel (F0) verbundenen gemeinsam genutzten Aufwärtsabtaster (S 1') speist.

**10.** Modulator nach Anspruch 9, **dadurch gekennzeichnet, dass** der gemeinsam genutzte Multiplexer (MX0) einen dritten Eingang zum Einführen der Rücksetzfolge von auf Null gezwungenen Signalen umfasst.

**11.** Modulator nach einem der Ansprüche 1 bis 10, **dadurch gekennzeichnet, dass** erstes (M0', CM1', MX0, US1') und zweites (FSM', M1', CM2', US2') Initialisiemngsmittel mit einer gleichen gewählten Bitfolge gespeist werden.

**12.** Modulator nach Anspruch 5 oder 6, **dadurch gekennzeichnet, dass** das erste Modulationsmittel und das erste Filtermittel (F0) eine nullte Ordnung eines linearisierten GMSK-I/Q-Modulators definieren, das zweite Modulationsmittel und das zweite Filtermittel (F1) eine erste Ordnung des linearisierten GMSK-I/Q-Modulators definieren, die nullte Ordnung und die erste Ordnung des linearisierten GMSK-I/Q-Modulators mit gemeinsamen digitalen GMSK-I/Q-Signalen gespeist werden und das dritte Modulationsmittel und das erste Filtermittel (F0) einen mit digitalen GMSK-I/Q-Signalen gespeisten 8PSK-I/Q-Modulator definieren.

**13.** Drahtlose Kommunikationsvorrichtung, **dadurch gekennzeichnet, dass** diese einen Modulator (M) nach einem der vorangehenden Ansprüche umfasst.

**Revendications**

**1.** Modulateur (M) pour un équipement de communication sans fil, le modulateur étant commutable dans des intervalles de temps consécutifs, d'une salve de données comprenant des bits de données modulés selon un schéma de modulation à une autre salve de données comprenant des bits de données modulés selon un autre schéma de modulation, les intervalles de temps successifs étant séparés par des intervalles de garde contenant des bits de garde, le modulateur comprenant i) des moyens de modulation (SPC, M0, FSM, M1, GM, CM0, CM1, CM2, MX1, MX3, US1, US2) pour la génération de signaux numériques I/Q associés aux intervalles de temps d'un groupe d'intervalles de temps, et ii) des moyens de filtrage (F0, F1) pour appliquer une forme d'impulsion choisie définie par des valeurs de filtre aux dits signaux I/Q numériques pour fournir des signaux de sortie I/Q numériques modulés, **caractérisé par le fait que** le modulateur comporte en outre des moyens d'initialisation (SPC', M0', FSM', M1', GM', CM0', CM2', US1', US2', MX0) agencés en réponse à la réception d'une salve d'émission de signaux numériques I/Q, pour envoyer aux dits moyens de filtrage des symboles choisis, valides ayant subi une rotation, alignés temporellement avec les bits de garde et les bits de données successifs, avant la transmission aux dits moyens de filtrage des derniers bits de garde remplissant ledit intervalle de garde, **par le fait que** les moyens d'initialisation comprennent des premiers moyens d'initialisation (M0', CM1', MX0', US1'), des deuxièmes moyens d'initialisation (FSM', M1', CM2', US2') et des troisièmes moyens d'initialisation (SPC', GM', CM0', US1', MX0), chacun des premiers, deuxièmes et troisièmes moyens d'initialisation comprenant au moins un dispositif de transformation de bits en symboles (M0', M1', GM') alimentés respectivement par une séquence de bits choisie et un multiplicateur (CM0', CM2', CM1') comportant une première entrée raccordée audit dispositif de transformation de bits en symboles et une deuxième entrée recevant des signaux de rotation choisie, et conçu pour fournir lesdits symboles valides ayant subi une rotation en fonction des dits signaux de rotation et de ladite séquence de bits choisie, et **par le fait que** des moyens de remise à zéro sont prévus pour fournir aux moyens de filtrage (F0, F1), juste avant la transmission, aux dits moyens de filtrage des derniers bits de données de ladite salve reçue, d'une séquence de remise à zéro de signaux forcés à zéro pour que lesdits moyens de filtrage génèrent en sortie des signaux I/Q numériques modulés forcés à zéro.

2. Modulateur selon la revendication 1, **caractérisé par le fait que** les moyens d'initialisation (SPC', M0', FSM', M1', GM', CM0', CM2', US1', US2', MX0) sont conçus pour fournir à l'entrée de moyens de traitement des dits moyens de modulation une valeur constante choisie en association avec l'envoi aux moyens de filtrage des dits symboles valides ayant subi une rotation.

3. Modulateur selon la revendication 2, **caractérisé par le fait que** ladite valeur constante est égale à « 1 ».

4. Modulateur selon la revendication 2, **caractérisé par le fait que** ladite valeur constante est égale à « 0 ».

5. Modulateur selon l'une quelconque des revendication 1 à 4, **caractérisé par le fait que** lesdits moyens de modulation (SPC, M0, FSM, M1, GM, CM0, CM1, CM2, MX1, MX3, US1, US2) comprennent au moins un premier (M0, CM1, MX1, US1), un deuxième (FSM, M1, CM2, MX3, US2) et un troisième (SPC, GM, CM0, MX1, US) moyen de modulation, et que lesdits moyens de filtrage (F0, F1) comprennent au moins un premier moyen de filtrage (F0) raccordé aux dits premier et troisième moyens de modulation à travers un premier moyen de multiplexage (MX2$_i$) et un deuxième moyen de filtrage (F1) raccordé audit deuxième moyen de modulation à travers un deuxième moyen de multiplexage (MX4$_j$).

6. Modulateur selon la revendication 5, **caractérisé par le fait que** ledit premier moyen de filtrage (F0) et ledit deuxième moyen de filtrage (F1) sont des filtres à réponse impulsionnelle finie, divisés chacun en étages et générant en sortie respectivement un premier et un deuxième signal I/Q numérique modulé, et **par le fait qu'**il comporte des moyens de combinaison (C1-Cn ; C1-Cq) agencés pour combiner lesdits premier et deuxième signaux I/Q numériques modulés pour constituer lesdits signaux I/Q numériques modulés.

7. Modulateur selon l'une quelconque des revendications 1 à 6, **caractérisé par le fait que** lesdits deuxièmes moyens d'initialisation (FSM', M1', CM2', US2') comprennent en outre un automate à états finis (FSM') ayant une entrée pour recevoir la séquence de bits choisie et une sortie raccordée au dispositif de transformation de bits en symboles (M1').

8. Modulateur selon l'une quelconque des revendications 1 à 7, **caractérisé par le fait que** lesdits troisièmes moyens d'initialisation (SPC', GM', CM0', US1', MX0) comprennent en outre un convertisseur série/parallèle (SPC') ayant une entrée pour recevoir la séquence de bits choisie et une sortie raccordée au dispositif de transformation de bits en symboles (GM').

9. Modulateur selon les revendication 5 ou 6, **caractérisé par le fait que** les premier (M0', CM1', MX0, US1') et troisième (SPC', GM', CM0', US1', MX0) moyens d'initialisation partagent un multiplexeur (MX0) comprenant au moins une première et une deuxième entrées respectivement raccordées aux dits multiplicateurs (CM1', CM2') et une sortie alimentant un ré-échantillonneur partagé (US1') raccordé aux premiers moyens de filtrage (F0).

10. Modulateur selon la revendication 9, **caractérisé par le fait que** ledit multiplexeur partagé (MX0) comporte une troisième entrée pour l'introduction de ladite séquence de remise à zéro de signaux forcés à zéro.

**11.** Modulateur selon l'une quelconque des revendications 1 à 10, **caractérisé par le fait que** lesdits premier (M0', CM1', MX0, US1') et deuxième (FSM', M1', CM2', US2') moyens d'initialisation sont alimentés par la même séquence de bits choisie.

**12.** Modulateur selon les revendications 5 ou 6, **caractérisé par le fait que** lesdits premiers moyens de modulation et lesdits premiers moyens de filtrage (F0) définissent un ordre zéro d'un modulateur I/Q GMSK linéarisé, lesdits deuxièmes moyens de modulation et lesdits deuxièmes moyens de filtrage (F1) définissent un premier ordre dudit modulateur I/Q GMSK linéarisé, ledit ordre zéro et ledit premier ordre dudit modulateur I/Q GMSK linéarisé étant alimentés avec des signaux I/Q numériques GMSK communs, et lesdits troisièmes moyens de modulation et lesdits premiers moyens de filtrage (F0) définissent un modulateur I/Q 8PSK alimenté avec les signaux I/Q numériques GMSK.

**13.** Equipement de communication sans fil, **caractérisé par le fait qu'**il contient un modulateur (M) selon l'une quelconque des revendications précédentes.

FIG. 1

FIG. 2A

FIG. 2B

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2004021659 A

- EP 03104545 A

### Non-patent literature cited in the description

- **BODE P et al.** Combined GMSK and 8PSK modulator for GSM and EDGE. *ISCAS 2003 Proceedings of the 2003 IEEE International Symposium on Circuits and Systems,* 25 May 2003, vol. 3-5, III-614-III-617

- **P.A. LAURENT.** Exact and approximate construction of digital phase modulations by superposition of amplitude modulated pulses (AMO. *IEEE Transactions on communications,* 1994, vol. 42 (2/3/4

- **P. JUNG.** Laurent's representation of binary digital continuous phase modulated signals with modulation index ½ revisited. *IEEE Trans. Comm.,* 1994, vol. 42, 221-224